# EUROPÄISCHE PATENTANMELDUNG

(11) **EP 2 823 960 A1**
(43) Veröffentlichungstag der Anmeldung: **14.01.2015**
(21) Anmeldenummer: 13176255.1
(22) Anmeldetag: 12.07.2013
(51) Int. Cl.: B32B 21/00, E04C 2/16, E04C 2/24, E04C 2/288, E04C 2/296, E04C 2/30, E04C 2/38, E04C 2/40

(54) **Bauelement, insbesondere Wandelement**

(71) Anmelder: Weinmann Holzbausystemtechnik GmbH, 72813 St. Johann (DE)
(72) Erfinder: Weinmann, Karl, 72813 St. Johann (DE)
(74) Vertreter: Kohler Schmid Möbus

(57) **Zusammenfassung**

Ein Bauelement, insbesondere Wandelement (10), das aus mehreren Lagen parallel zueinander angeordneter Bretter (21, 21a, 21b) gebildet ist, wobei die Bretter (21, 21a, 21b) benachbarter Lagen eine unterschiedliche Ausrichtung aufweisen und in mindestens eine der Lagen (200) mindestens eine in einem Winkel zu der Ausrichtung der Bretter (21, 21a, 21b) dieser Lage (200) verlaufende Aussparung (22, 23) eingebracht ist, in die eine Latte (24, 25) eingefügt ist.

## Beschreibung

Zur Herstellung massiver Wandelemente aus Holz ist es bekannt, mehrere Lagen aus parallel nebeneinander liegenden Brettern zu bilden und die einzelnen Lagen miteinander zu verleimen, zu vernageln, zu verschrauben oder zu verklammern. Dabei sind die Bretter der aufeinanderfolgenden Lagen jeweils senkrecht zueinander ausgerichtet, um einen stabilen Verbund aus sich kreuzenden Brettern zu erhalten.

Aus dem so gefertigten massiven mehrschichtigen Wandelement können je nach Bedarf Fenster- und Türöffnungen ausgesägt werden. Die Oberflächen lassen sich beispielsweise mit einem Verputz versehen und es können Kanäle zur Leitungsführung in die Elemente eingebracht und weitere Bearbeitungen vorgenommen werden, sodass sich aus diesen Wandelementen Fertigbauteile für den Hausbau herstellen lassen. Insbesondere für mehrgeschossige Bauten weisen diese Wandelemente jedoch nicht genügend Eigensteifigkeit auf und können daher nur im Zusammenhang mit weiteren aussteifenden Elementen wie einem Ständerwerk oder aussteifenden Platten verwendet werden.

Der vorliegenden Erfindung liegt die Aufgabe zugrunde, die bekannten Bauelemente derart weiterzubilden, dass sie ohne zusätzliche Aussteifungen als selbsttragende Bauteile verwendet werden können.

Die Aufgabe wird gelöst durch ein Bauelement, insbesondere ein Wandelement, das aus mehreren Lagen parallel zueinander angeordneter Bretter gebildet ist, wobei die Bretter benachbarter Lagen eine unterschiedliche Ausrichtung aufweisen, und das dadurch gekennzeichnet ist, dass in mindestens eine der Lagen mindestens eine in einem Winkel zu der Ausrichtung der Bretter dieser Lage verlaufende Aussparung eingebracht ist, in die eine Latte eingefügt ist.

Die mindestens eine in einem Winkel ungleich 0° oder 180° geneigt verlaufende Latte sorgt für die für den Hausbau notwendige Aussteifung gegen Horizontallasten wie Winddruck und eine zusätzliche Abtragung vertikaler Lasten. Die Latte oder die Latten können dabei während der Fertigung des Bauelements in dieses integriert werden. Vorzugsweise liegen die Latten dabei in einer mittleren Lage des Bauelements, sodass sie von außen nicht sichtbar sind und die Oberflächenbearbeitung des Bauteils nicht einschränken. Die Bauelemente können eigensteife Wandoder Deckenelemente sein, aus denen sich auch mehrgeschossige Häuser ohne zusätzliche Aussteifungen wie ein Ständerwerk oder Platten herstellen lassen.

Eine besonders hohe Stabilität des Bauelements lässt sich erzielen, wenn mindestens zwei in einem Winkel verlaufende Aussparungen mit eingefügten Latten vorgesehen sind, wobei die Ausrichtung der beiden Aussparungen entgegengesetzt geneigt verläuft. Es ergeben sich dann symmetrische Aussteifungsverhältnisse, die Lasten aus allen Richtungen abtragen können.

Für eine besonders rationelle Fertigung der Bauelemente ist es außerdem von Vorteil, wenn die mindestens eine Aussparung in die Brettlage eingefräst ist. Die Lage mit den Brettern wird zunächst aufgelegt und mit der darunter liegenden Bretterlage verbunden und dann die Aussparungen in diese Bretterlage eingefräst. Danach werden die Latten in die Aussparungen eingelegt und befestigt, bevor die nächste Lage von Brettern aufgelegt und mit der darunterliegenden Lage verbunden wird. Das Fräsen kann dabei vorzugsweise CNC-gesteuert erfolgen. Werden die einzelnen Lagen durch Nägel, Schrauben oder Klammern miteinander verbunden, können die Frässpuren zur Herstellung der Aussparungen beim Nageln, Schrauben oder Klammern ausgespart werden, sodass der Fräser beim Einbringen der Aussparungen nicht beschädigt wird. Dadurch kann auch auf den Einsatz spezieller Nägel oder Klammern aus einem weichen Material wie Aluminium zur Schonung des Fräsers verzichtet werden. Es können vielmehr Standardnägel oder -klammern aus Stahl zur Verbindung der Lagen verwendet werden.

Bei dem Bauelement können in an sich bekannter Weise die Bretter benachbarter Lagen senkrecht zueinander ausgerichtet sein, was eine einfache und kostengünstige Fertigung insbesondere rechteckiger Bauelemente durch Lagen aus jeweils gleich langen Brettern ermöglicht. Weitere Vorteile ergeben sich, wenn die Lagen mit Aussparungen für Fenster- und/oder Türöffnungen versehen sind. Werden die Fensterund/oder Türöffnungen bereits beim Herstellen der Lagen durch Verwendung entsprechend gekürzter Bretter hergestellt, so müssen diese Aussparungen nicht nachträglich durch Aussägen hergestellt werden. Es entsteht dadurch weniger Holzabfall. Die Öffnungen können dabei etwas kleiner hergestellt werden als für die einzusetzenden Fenster oder Türen erforderlich, um Fertigungstoleranzen durch ein späteres Aussägen auf das exakte Maß ausgleichen zu können.

Die Bretter einer Lage können mit den Brettern benachbarter Lagen durch Nägel, Klammern, Schrauben und/oder Kleben verbunden sein. Für eine besonders rationelle Fertigung sind Nägel oder Klammern vorzuziehen, die durch automatische Nagel- oder Klammerapparate nach einem vorgebbaren Muster und unter Freilassung der späteren Aussparungen für die Latten und von Fenster- oder Türöffnungen in die Bretterlagen eingeschossen werden können.

Die Bretter einer Lage können jeweils durch eine Nut- und Federverbindung miteinander verbunden sein, sodass eine lückenlose und in sich stabile Bretterlage entsteht.

Nachfolgend wird die Herstellung eines bevorzugten Ausführungsbeispiels eines erfindungsgemäßen Wandelements anhand der Zeichnung näher beschrieben.

Es zeigen:
- Fig. 1a,b: eine Draufsicht sowie eine Ansicht von oben auf die erste Lage eines Wandelements;
- Fig. 2a,b: eine Draufsicht und eine Ansicht von oben auf die erste und zweite Lage des Wandelement;
- Fig. 3a,b: eine Draufsicht und eine Ansicht von oben auf alle drei Lagen des Wandelements.

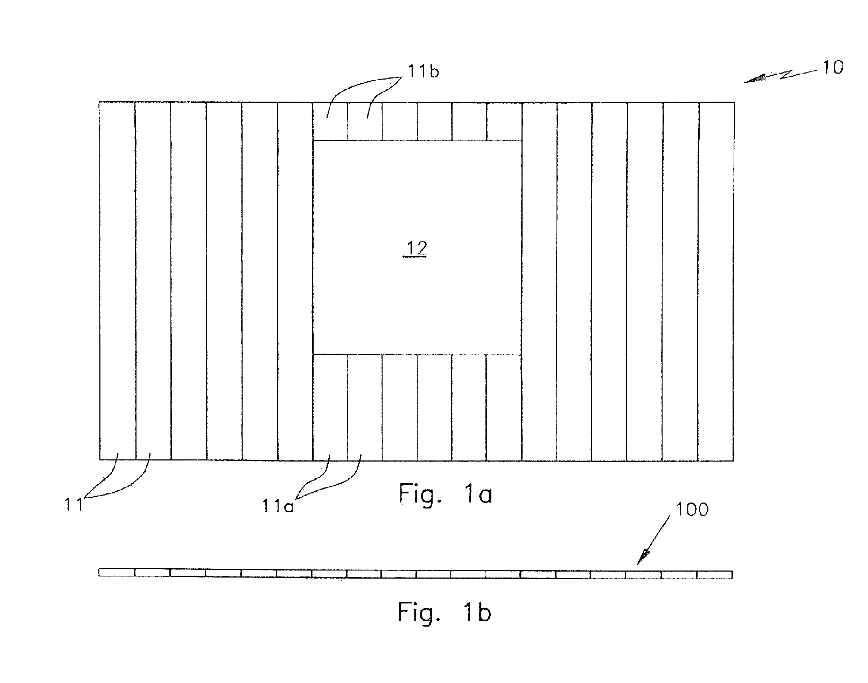

Das Wandelement 10, dessen Herstellung und damit dessen Aufbau in den Figuren gezeigt ist, wird gemäß Fig. 1a durch Legen einer ersten Lage 100 (Fig. 1b) von Brettern 11 in vertikaler Ausrichtung hergestellt. Die Bretter 11 können beispielsweise durch Nut- und Federverbindungen an ihren Längsseiten miteinander verbunden werden, damit eine lückenlose Lage 100 entsteht. Beim Legen der Lage 100 wird eine Fensteröffnung 12 ausgespart, indem an dieser Stelle kürzere Bretter 11a und 11b eingesetzt werden, während die Bretter 11 eine Länge entsprechend der gewünschten Wandhöhe des Gebäudes aufweisen.

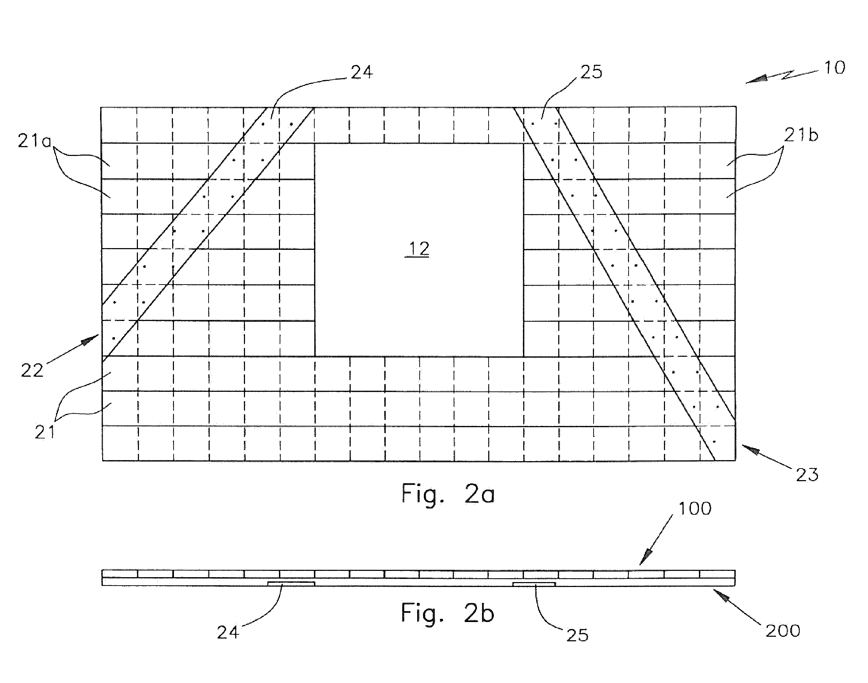

Nach Fertigstellung der ersten Lage 100 wird gemäß Figur 2 eine zweite Lage 200 von Brettern 21 auf die erste Lage 100 aufgelegt, wobei hier die Bretter 21 quer ausgerichtet sind und somit einen Winkel von 90° mit den Brettern 11, 11a, 11b der ersten Lage 100 bilden. Auch in der zweiten Lage 200 werden kürzere Bretter 21a, 21b eingesetzt, um die Fensteröffnung 12 auszusparen. Die Bretter 21, 21a und 21 b werden mit der ersten Lage 100 vernagelt oder verklammert. Danach werden in die zweite Lage 200 zwei schräg verlaufende Aussparungen 22, 23 eingefräst, in die anschließende Latten 24, 25 eingelegt und ebenfalls mit der Lage 100 vernagelt oder verklammert werden.

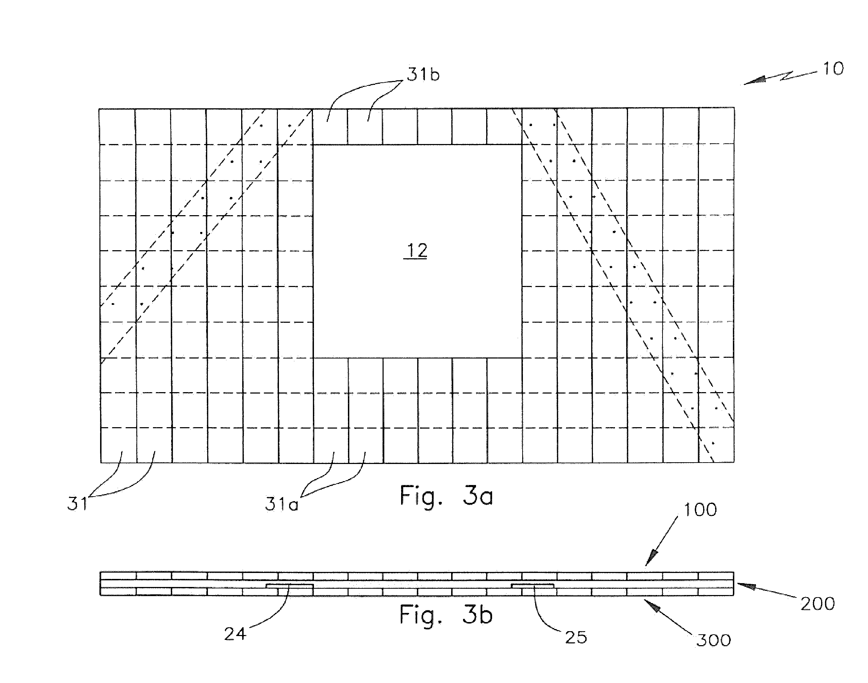

Im letzten Schritt wir gemäß Figur 3 eine dritte Lage 300 von Brettern 31 aufgelegt, wobei die Bretter 31 wieder vertikal ausgerichtet sind. Die Fensteröffnung 12 wird durch Verwendung kürzerer Bretter 31a, 31b ausgespart. Die Lage 300 ist somit gleich aufgebaut wie die Lage 100. Die Lagen 100 und 300 decken die Latten 24 und 25 nach außen hin ab.

## Patentansprüche

1. Bauelement, insbesondere Wandelement (10), das aus mehreren Lagen (100, 200, 300) parallel zueinander angeordneter Bretter (11, 11a, 11b; 21, 21a, 21b; 31, 31a, 31b) gebildet ist, wobei die Bretter (11, 11a, 11b; 21, 21a, 21b; 31, 31a, 31b) benachbarter Lagen (100, 200, 300) eine unterschiedliche Ausrichtung aufweisen, **dadurch gekennzeichnet, dass** in mindestens eine der Lagen (200) mindestens eine in einem Winkel zu der Ausrichtung der Bretter (21, 21a, 21b) dieser Lage (200) verlaufende Aussparung (22, 23) eingebracht ist, in die eine Latte (24, 25) eingefügt ist.

2. Bauelement nach Anspruch 1, **dadurch gekennzeichnet, dass** mindestens zwei in einem Winkel verlaufende Aussparungen (22, 23) mit eingefügten Latten (24, 25) vorgesehen sind, wobei die Ausrichtung der beiden Aussparungen (22, 23) entgegengesetzt geneigt verläuft.

3. Bauelement nach Anspruch 1 oder 2, **dadurch gekennzeichnet, dass** die mindestens eine Aussparung (22, 23) in die Brettlage (200) eingefräst ist.

4. Bauelement nach einem der vorhergehenden Ansprüche, **dadurch gekennzeichnet, dass** die Bretter (11, 11a, 11b; 21, 21a, 21b; 31, 31a, 31b) benachbarter Lagen (100, 200, 300) senkrecht zueinander ausgerichtet sind.

5. Bauelement nach einem der vorhergehenden Ansprüche, **dadurch gekennzeichnet, dass** die Lagen (100, 200, 300) mit Aussparungen (12) für Fenster- und/oder Türöffnungen versehen sind.

6. Bauelement nach einem der vorhergehenden Ansprüche, **dadurch gekennzeichnet, dass** die Bretter (11, 11a, 11b; 21, 21a, 21b; 31, 31a, 31b) einer Lage (100, 200, 300) mit den Brettern (11, 11a, 11b; 21, 21a, 21b; 31, 31a, 31b) benachbarter Lagen (100, 200, 300) durch Nägel, Klammern und/oder Kleben verbunden sind.

7. Bauelement nach einem der vorhergehenden Ansprüche, **dadurch gekennzeichnet, dass** die Bretter (11, 11a, 11b; 21, 21a, 21b; 31, 31a, 31b) einer Lage (100, 200, 300) jeweils durch eine Nutund Federverbindung miteinander verbunden sind.
